# EUROPEAN PATENT APPLICATION

(11) **EP 1 440 863 A1**
(43) Date of publication of application: **28.07.2004**
(21) Application number: 03029090.2
(22) Date of filing: 17.12.2003
(51) Int. Cl.: B62B 9/12, A47G 9/06

(54) **Seat forming member of a child transporting instrument**

(30) Priority: 27.01.2003 JP 2003016853
(71) Applicant: Aprica Kassai Kabushikikaisha, Osaka-shi, Osaka 542-0082 (JP)
(72) Inventor: Kassai, Kenzou, Osaka-shi Osaka 542-0083 (JP); Ohnishi, Ichiro, Chuo-ku Osaka-shi Osaka 542-0082 (JP)
(74) Representative: Hofer, Dorothea, Dipl.-Phys.

(57) **Abstract**

A seat hammock (1) of a baby carriage comprises a seat portion (2), a backrest portion (3) and a body cover (10). The body cover (10) extends from both side edges (2a) of the seat portion (2) and both side edges (3a) of the backrest portion (3) toward the center and covers the seat portion (2) and the backrest portion (3).

## Description

### BACKGROUND OF THE INVENTION

### Field of the Invention

The present invention relates to a seat forming member of a child-care instrument such as a baby carriage, a child safety seat or the like and more particularly, it relates to a seat forming member having an excellent cold protection function.

### Description of the Background Art

At the time of going out with a child in a baby carriage in a cold season, it is necessary to protect the child from the cold. Therefore, in general, a warm cloth such as a blanket is laid over the child seated in the seat.

However, since the child often moves on the seat, the blanket falls down or slips out of place, which causes insufficient cold protection. Further, when the baby carriage is folded, it is necessary to take the blanket away so as not to hinder the folding operation.

An outfit for protection against cold which does not slip off a seat of a baby carriage is disclosed in Publication No. 6-71366 of unexamined Japanese Utility Model Application. According to the outfit for protection against cold, two pieces of warm cloth are sewed together and connected to the body of the baby carriage by using a string mounted on its upper end. The outfit for protection against cold extends over the seat of the baby carriage and both legs of the child are put in the overlapped portion of the warm cloth.

The outfit for protection against cold disclosed in Japanese Utility Model Publication No. 6-71366 is prepared separately from a seat forming member of the baby carriage. Therefore, the number of parts is increased and a mounting operation on the seat forming member is troublesome. Furthermore, since it is prepared separately from the seat forming member of the baby carriage, it could hinder a folding operation of the baby carriage, for example. Even if the baby carriage can be folded in a state where the outfit is mounted, the position of the outfit could slip out of place when the baby carriage is opened.

In addition, since the outfit for protection against cold disclosed in Japanese Utility Model Publication No. 6-71366 keeps only both legs of the child warm, protection against cold is not sufficient.

### SUMMARY OF THE INVENTION

It is an object of the present invention to provide a seat forming member of a child-care having an excellent cold protection function. More particularly, it is to provide a seat forming member in which position adjustment is unnecessary in both states in which the child-care instrument are opened and folded and during a transferring operation between both states.

A seat forming member of a child-care instrument according to the present invention comprises a seat portion, a backrest portion, and a body cover extending from both side edges of the seat portion and both side edges of the backrest portion toward the center, and covering the seat portion and the backrest portion.

According to the above constitution, since the seat forming member itself comprises the body cover, the number of parts can be reduced. Especially, in the case of the child-care instrument which can implement an opened state and a folded state, the body cover can be conveniently housed in the seat in both states. In addition, since the body cover extends from both side edges of the seat portion and both side edges of the backrest portion toward the center, almost the whole of the child body can be kept warm. Furthermore, since the body cover is connected to both side edges of the seat portion and the backrest portion, drafts can be effectively prevented. When the body cover is used by appropriately selecting a material of the body cover even in a hot season, the child body can be protected from ultraviolet rays.

According to one embodiment, the backrest portion of the seat forming member includes a pair of side walls rising from both side edges thereof. In this case, the body cover preferably extends from the upper ends of the pair of side walls toward the center. According to this constitution, large space for holding the child can be provided between the body cover and the backrest surface or the seat surface. Preferably, the body cover extends along the pair of side walls and the backrest surface of the backrest portion in a horseshoe shape in order to provide larger space for holding the child or to be able to put the child on the body cover.

Preferably, a front edge of the body cover and a front edge of the seat portion are releasably connected. Thus, when the child grows up, legs of the child can be released by releasing the front edge of the body cover and the front edge of the seat portion.

According to one embodiment, the body cover is detachably connected to the seat portion and the backrest portion. As a concrete example, both side edges of the body cover are detachably connected to both side edges of the seat portion and the backrest portion. Thus, the body cover can be attached in a cold season and it can be detached in a hot season.

Preferably, an upper edge of the body cover includes a neck portion cut in a horseshoe shape, and upper ends connecting portions extending both sideways from upper ends of the neck portion and connected to upper edge of the backrest portion. According to the above constitution, the shoulder portion of the child can be protected from the cold air. In addition, since the upper portion of the shoulder is closed, drafts can be prevented from entering.

According to one embodiment, the body cover has a cut portion cut in downward from the upper edge thereof. The parts separated on either side by the cut portion are detachably connected. As a concrete example, the body cover may comprise a slide fastener extending downward from the center of the upper edge thereof. According to the above constitution, since the center portion of the body cover can be opened by drawing the slide fastener downward, the child can be easily put under the body cover or easily picked up from the seat portion.

Furthermore, according to one embodiment, the body cover has a neck portion cut from the upper edges thereof in a horseshoe shape, and a periphery of the body cover except for the neck portion is detachably connected to the seat portion and the backrest portion. Thus, the drafts can be prevented from entering from almost the whole periphery of the body cover. As means for detachable connection, a slide fastener can be used, for example.

The seat forming member is a seat hammock mounted on a body of a baby carriage and forming a seat, for example. In this case, preferably, the body cover has slits for passing a crotch belt and a waist belt mounted on the baby carriage. According to the above constitution, the child can be seated on the body cover in the hot season without detaching the body cover. According to one embodiment, the body cover has a cut portion cut from the upper edge thereof to the slit for the crotch belt, and parts separated on either side by the cut portion are detachably connected.

### BRIEF DESCRIPTION OF THE DRAWINGS

Fig. 1 is a plan view showing an exploded state of a seat hammock according to an embodiment of the present invention;
Fig. 2 is a plan view showing a state in which a body cover is detached from the state shown in Fig. 1;
Fig. 3 is a perspective view showing a used state of the seat hammock; and
Fig. 4 is a perspective view showing a state in which a child is seated on the body cover.

### DESCRIPTION OF THE PREFERRED EMBODIMENTS

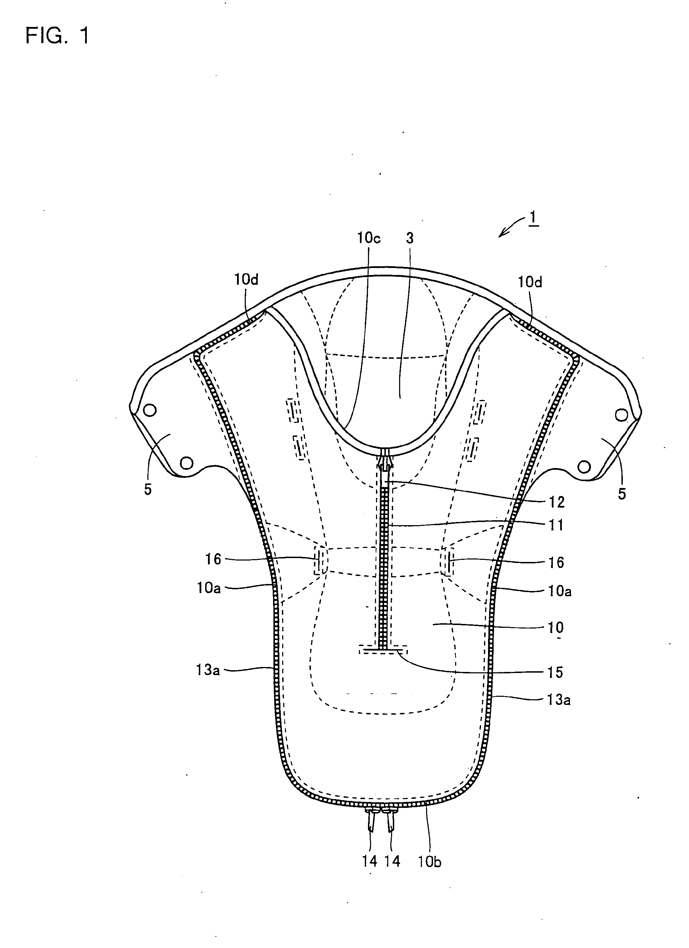

One embodiment of the present invention is described with reference to Figs. 1 to 4. According to this embodiment, a baby carriage is illustrated as an example of a child-care instrument and a seat hammock mounted on a body of the baby carriage and forming a seat is illustrated as an example of a seat forming member.

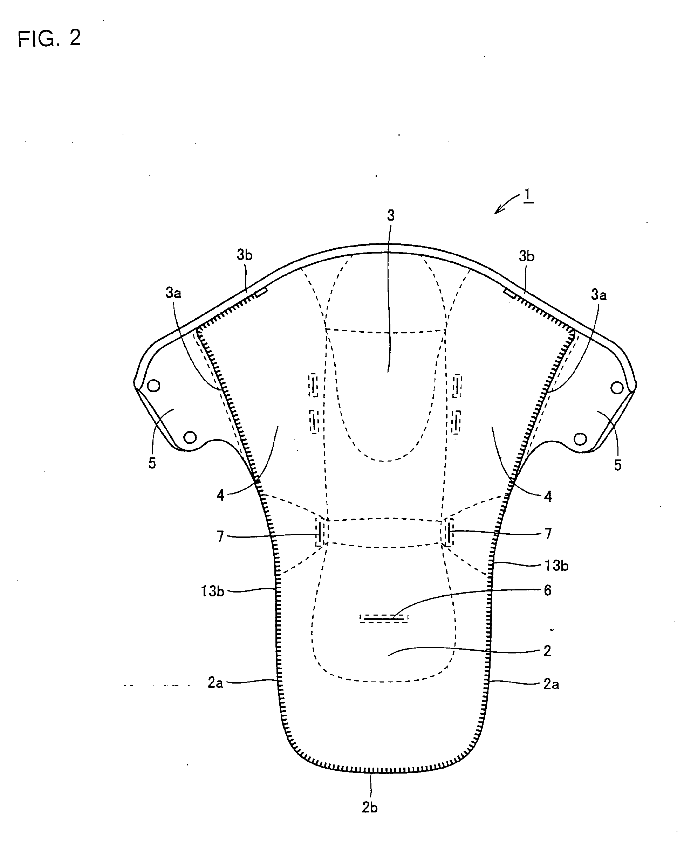

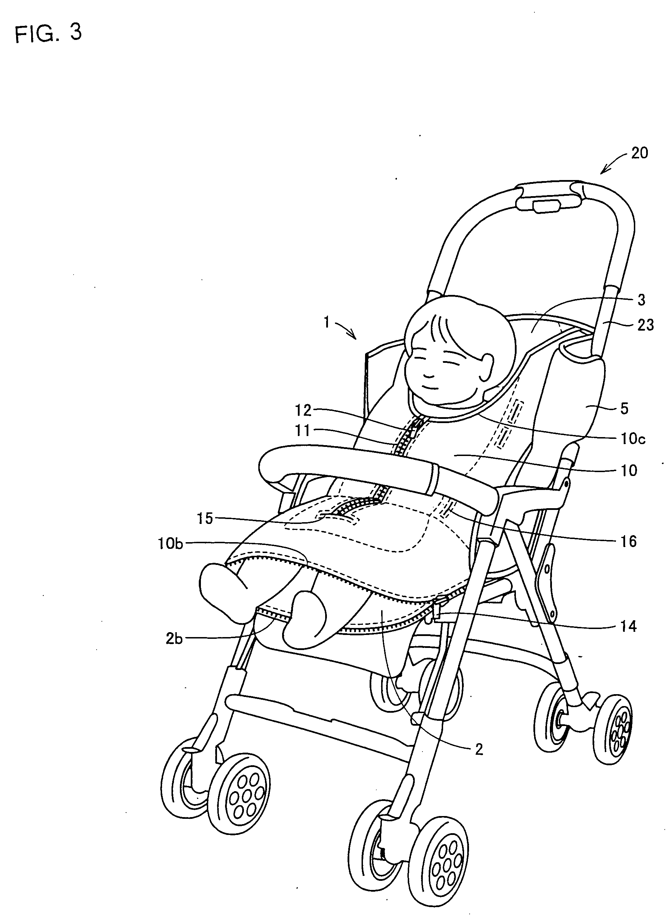

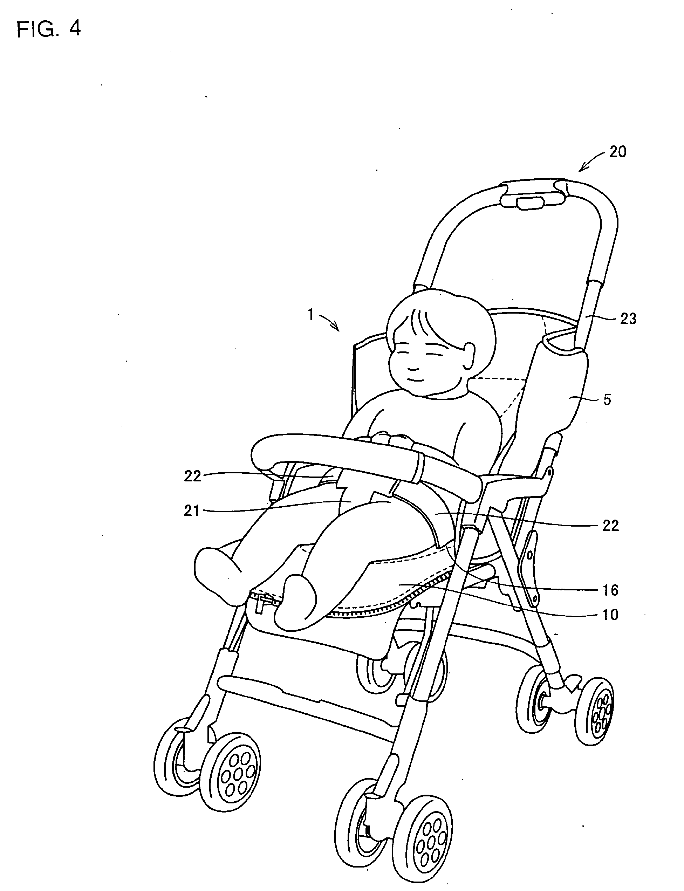

As shown in Figs. 3 and 4, a seat hammock 1 is fixed to a body 20 and forms a seat for a child to be seated. As shown in Figs. 1 and 2, the seat hammock 1 comprises a seat portion 2, a backrest portion 3 and a body cover 10. According to the illustrated embodiment, the body cover 2 is detachably provided. Fig. 2 shows a state in which the body cover 2 is detached.

The body cover 10 extends from both side edges 2a of the seat portion 2 and both side edges 3a of the backrest portion 3 toward the center and covers the seat portion 2 and the backrest portion 3.

The backrest portion 3 of the seat hammock 1 includes a pair of side walls 4 rising from both side edges thereof when attached to the body 20 of the baby carriage. In this case, preferably, both side edges 10a of the body cover 10 is connected to upper ends of the side walls 4. In an exploded state of the seat hammock 1 shown in Figs. 1 and 2, the side walls 4 extend horizontally. Therefore, in a used state thereof, the body cover 10 extends in a horseshoe shape along the pair of side walls 4 and a backrest surface.

In addition, according to this specification, it should be understood that the side wall 4 constitutes a part of the backrest portion 3, and the side edge 3a of the backrest portion 3 includes the upper end of the side wall 4.

As shown in Figs. 1 and 2, a pair of side projecting portions 5 projects from both sides of the backrest portion 3. As shown in Figs. 3 and 4, the side projecting portions 5 are connected to a rod 23 of the baby carriage body 20.

According to the illustrated embodiment, both side edges 10a of the body cover 10 are detachably connected to the both side edges 3a of the backrest portion 3 and both side edges 2a of the seat portion 2 through a slide fastener, for example. In addition, a front edges 10b of the body cover 10 is detachably connected to a front edge of the seat portion 2 through a slide fastener, for example. The slide fastener includes engagement rails 13a and 13b engaging each other and a slider 14. One engagement rail 13a is provided at the body cover 10 and the other engagement rail 13b is provided at the seat portion 2 and the backrest portion 3.

As can be clear from Fig. 1, an upper edge of the body cover 10 has a neck portion 10c cut in a horseshoe shape, and an upper end connecting portions 10d extending both sideways from upper end of the neck portion 10c and connected to the upper edge 3b of the backrest portion 3. The upper end connecting portion 10d of the body cover 10 and the upper edge 3b of the backrest portion 3 are detachably connected to each other through a slide fastener, for example. According to the illustrated embodiment, a periphery of the body cover 10 except for the neck portion 10c is detachably connected to the seat portion 2 and the backrest portion 3 through the common slide fastener.

As shown n Fig. 1, the body cover 10 has a center slide fastener extending downward from the center of the neck portion 10c of the body cover 10. The center slide fastener includes engagement rails 11 and a slider 12.

As shown in Fig. 2, a slit 6 for passing a crotch belt 21 (see Fig. 4) and a slit 7 for passing a waist belt 22 are provided in the seat portion 2. The slit for the waist belt 22 may be provided at a boundary between the seat portion 2 and the backrest portion 3 or at a lower region of the backrest portion 3.

As shown in Figs. 1 and 3, a slit 15 for passing the crotch belt 21 and a slit 16 for passing the waist belt 22 are provided in the body cover 10 also. A lower end of the above described center slide fastener extends up to the slit 15 of the body cover 10.

Next, a description is made of a method of using the seat hammock 1 and a used state thereof.

The seat hammock 1 is attached to the body 20 of the baby carriage by a normal method. The seat hammock 1 supported from beneath and behind by the body 20 forms the seat for a child to be seated.

At the time of going out with the child in the baby carriage in a cold season, the slider 12 of the center slide fastener of the body cover 10 is drawn downward to largely open the front of the body cover 10 to put the child on the seat first. Then, the body of the child is restrained by the crotch belt 21 and the waist belt 22 which are mounted on the body of the baby carriage and drawn out of the slits 6 and 7 of the seat portion 2, respectively. Finally, the slider 12 of the center slide fastener is drawn upward to close the front of the body cover 10.

In addition, when the child body is big and the legs are a tight fit, the front edge 10b of the body cover 10 and a front edge 2b of the seat portion 2 are separated by operating the slider 14 to be opened, as shown in Fig. 3.

Through the above operations, the state shown in Fig. 3 is provided. Since the body cover 10 covers the whole body of the child except for the head of the child in this state, excellent heat-retention effect can be provided. In addition, since the periphery of the body cover 10 is connected to the seat portion 2 and the backrest portion 3 through the slide fastener, drafts can be effectively cut off. Especially, since the upper end connecting portions 10d of the body cover 10 and the upper edge 3b of the backrest portion 3 are connected through the slide fastener, cool air is prevented from entering from this portion and the shoulder portion of the child is prevented from being cooled.

Furthermore, according to the illustrated embodiment, since the backrest portion 3 includes the pair of rising side walls 4, and the body cover 10 extends from the upper ends of the side walls 4 toward the center in almost the horseshoe shape, large space for holding the child can be provided between the body cover 10 and the backrest surface or the seat surface.

At the time of going out with the child in the baby carriage in the hot season, the crotch belt 21 and the waist belt 22 are drawn out of the slits 15 and 16 of the body cover 10 with the front of the body cover 10 closed. As shown in Fig. 4, the child can be put on the body cover 10 and the body of the child is restrained by the crotch belt.21 and the waist belt 22.

According to the illustrated embodiment, since the body cover 10 is detachably provided, the body cover 10 may be detached in the hot season.

As described above, according to one embodiment of the present invention, there can be provided a seat forming member of a child-care instrument having an excellent cold protection function.

In addition, since the above described and illustrated embodiment describes the present invention illustratively, various modifications and variations can be added in the same or an equivalent range of the present invention. Some of them are listed and illustratively described.
(1) If the body cover 10 is detached in a hot season, the slits for passing the crotch belt and the waist belt may not be provided in the body cover.
(2) The body cover 10 may be stably sewed on the seat portion and the backrest portion instead of being detachably provided.
(3) Means for detachably providing the body cover 10 is not limited to the slide fastener. Substitute means such as a button, a surface fastener or the like can be employed. Similarly, a button, a surface fastener or the like can be employed instead of the center slide fastener.
(4) The body cover may have holes for passing the arms of the child.
(5) Protection against cold may not be contemplated only by the body cover. When the body cover is used by appropriately selecting a material of the body cover even in the hot season, the child body can be protected from ultraviolet rays.
(6) According to the illustrated embodiment, although the baby carriage was illustrated as the child-care instrument and the seat hammock was illustrated as the seat forming member, it is needless to say that a child seat or the like can be used as the child-care instrument other than the baby carriage. Furthermore, there is a member in which a seat is formed by a rigid material as the seat forming member. In this case also, the body cover may be connected to the rigid seat portion and backrest portion.

## Claims

1. A seat forming member of a child-care instrument comprising:
a seat portion (2);
a backrest portion (3); and
a body cover (10) extending from both side edges of said seat portion and both side edges of said backrest portion toward the center, and covering said seat portion and said backrest portion.

2. The seat forming member of a child-care instrument according to claim 1, wherein said backrest portion (3) includes a pair of side walls (4) rising from both side edges thereof, and said body cover extends from the upper ends of said pair of side walls toward the center.

3. The seat forming member of a child-care instrument according to claim 2, wherein said body cover (10) extends along the pair of side walls (4) and a backrest surface of said backrest portion (3).

4. The seat forming member of a child-care instrument according to any one of claims 1 to 3, wherein a front edge of said body cover (10) and a front edge of said seat portion (2) are releasably conntected.

5. The seat forming member of a child-care instrument according to any of claims 1 to 4, wherein said body cover (10) is detachably connected to said seat portion (2) and said backrest portion (3).

6. The seat forming member of a child-care instrument according to claim 5, wherein both side edges of said body cover (10) are detachably connected to both side edges of said seat portion (2) and said backrest portion (3).

7. The seat forming member of a child-care instrument according to any of claims 1 to 6, an upper edge of said body cover (10) includes a neck portion (10c) cut in a horseshoe shape, and upper end connecting portions (10d) extending both sideways from upper ends of the neck portion and connected to an upper edge of said backrest portion (3).

8. The seat forming member of a child-care instrument according to any of claims 1 to 7, wherein said body cover (10) has a cut portion cut in downward from an upper edge thereof, and parts separated on either side by said cut portion are detachably connected.

9. The seat forming member of a child-care instrument according to claim 8, wherein said body cover (10) includes a slide fastener (11, 12) extending downward from the center of the upper edge thereof.

10. The seat forming member of a child-care instrument according to any of claims 1 to 9, wherein said body cover (10) has a neck portion (10c) cut from the upper edges thereof in a horseshoe shape, and a periphery of said body cover except for said neck portion is detachably connected to said seat portion (2) and said backrest portion (3).

11. The seat forming member of a child-care instrument according to any of claims 1 to 10, wherein said seat forming member is a seat hammock (1) mounted.on a body of a baby carriage and forming a seat.

12. The seat forming member of a child-care instrument according to claim 11, wherein said body cover (10) has a slit (15) for passing a crotch belt and a waist belt mounted on the baby carriage.

13. The seat forming member of a child-care instrument according to claim 12, wherein said body cover (10) has a cut portion cut from the upper edges thereof to the slit (15) for the crotch belt, and parts separated on either side by said cut portion are detachably connected.
